# EUROPÄISCHE PATENTSCHRIFT

(11) **EP 3 036 886 B1**
(45) Veröffentlichungstag und Bekanntmachung des Hinweises auf die Patenterteilung: **31.05.2023**
(21) Anmeldenummer: 14755371.3
(22) Anmeldetag: 22.08.2014
(51) Int. Cl.: G08G 1/09, G08G 1/0967, G08G 1/16

(54) **FILTERUNG VON INFRASTRUKTURBESCHREIBUNGSNACHRICHTEN**
FILTERING INFRASTRUCTURE DESCRIPTION MESSAGES
FILTRAGE DE MESSAGES DE DESCRIPTION D'INFRASTRUCTURES

(30) Priorität: 22.08.2013 DE 102013216631
(43) Veröffentlichungstag der Anmeldung: 29.06.2016
(73) Patentinhaber: Continental Automotive Technologies GmbH, 30165 Hannover (DE)
(72) Erfinder: GROTENDORST, Thomas, 65760 Eschborn (DE); MENZEL, Marc, 35096 Weimar (DE); SCHERPING, Richard, 65835 Liederbach am Taunus (DE); STÄHLIN, Ulrich, 65760 Eschborn (DE)
(74) Vertreter: Continental Corporation
(86) Internationale Anmeldenummer: PCT/EP2014/067950
(87) Internationale Veröffentlichungsnummer: WO 2015/025056

(56) Entgegenhaltungen:
- WO-A1-2013/102575
- DE-A1-102007 032 956
- US-A1- 2011 140 968
- US-A1- 2013 083 679
- "Intelligent Transport Systems (ITS); Vehicular Communications; Basic Set of Applications; [Part 3: Specifications of Decentralized Environmental Notification Basic Service", ETSI DRAFT; WG10002-3V211, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V2.1.1, 29 April 2010 (2010-04-29), pages 1-40, XP014072999, [retrieved on 2010-04-29]
- Wave Working Group Of The Its Committee: "IEEE Draft Guide for Wireless Access in Vehicular Environments (WAVE) - Architecture", IEEE P1609.0/D5, September 2012, 3 October 2012 (2012-10-03), XP055888186, IEEE P1609.0/D5, September 2012 Retrieved from the Internet: URL:https://ieeexplore.ieee.org/stampPDF/g etPDF.jsp?tp=&arnumber=6320595&ref=aHR0cHM 6Ly9pZWVleHBsb3JlLmllZWUub3JnL2RvY3VtZW50L zYzMjA1OTU= [retrieved on 2022-02-07]

## Beschreibung

Die Erfindung betrifft ein Verfahren zum Filtern eines in einem Fahrzeug-Ad-hoc-Netzwerk übertragenen Übertragungssignals, das wenigstens Positionsdaten zu Teilnehmern in einem Fahrzeug-Ad-Hoc-Netzwerk in Datenpaketen trägt, eine Filtervorrichtung zur Durchführung des Verfahrens und einen Empfänger mit der Filtervorrichtung.

Aus der WO 2010 / 139 526 A1 ist ein Car2X genanntes mobiles Ad-hoc-Netz bekannt, dessen Knoten bestimmte Straßenverkehrsteilnehmer wie Fahrzeuge oder andere Objekte im Straßenverkehr, wie Ampeln sind. Über diese Netzwerke können den am Car2X-Netzwerk beteiligten Straßenverkehrsteilnehmern Hinweise über Straßenverkehrszustände, wie Unfälle, Staus, Gefahrensituationen, ... bereitgestellt werden.

Die Druckschrift US 2011/140968 A1 beschreibt ein Filterverfahren eines Fahrzeug-zu-Fahrzeug-Kommunikationssystems. Dabei wird eine voraussichtliche Dauer bis zu einer Kollision eines ersten Fahrzeuges, welches eine Nachricht gesendet hat, mit einem zweiten Fahrzeug, welches diese Nachricht empfangen hat, auf Basis der relativen Distanz und der relativen Geschwindigkeit zwischen den beiden Fahrzeugen ermittelt. Auf Basis der solchermaßen ermittelten voraussichtlichen Dauer bis zu einer Kollision wird ein Aufmerksamkeitsfaktor bestimmt, wobei anhand des Aufmerksamkeitsfaktors bestimmt wird, ob die vom ersten Fahrzeug ausgesendeten vom zweiten Fahrzeug empfangenen Nachrichten im zweiten Fahrzeug weiterverarbeitet werden.

Die Druckschrift US 2013/083679 A1 beschreibt ein Verfahren zur Filterung von empfangenen Fahrzeug-zu-X-Botschaften auf Basis einer Bestimmung einer Priorität und einer Zuverlässigkeit der empfangenen Fahrzeug-zu-X-Botschaft. Die Zuweisung der Priorität kann in Abhängigkeit der im Header der Botschaft vorhandenen Informationen wie Data-Routing-Bit, MAC-Kennung, Zuverlässigkeitsparameter, Sicherheitskennung, Signalstärke, oder Dopplerverschiebung, oder auch in Abhängigkeit der Information selbst, wie die Position oder Höhenlage des Sendefahrzeugs oder des Nachrichtentyps (z.B. Sicherheitsinformation) erfolgen. Je nach der der empfangenen Botschaft zugewiesenen Priorität wird die empfangene Botschaft weiterverarbeitet.

Es ist Aufgabe die Nutzung derartiger mobiler Ad-hoc-Netze zu verbessern.

Die Aufgabe wird durch die Merkmale der unabhängigen Ansprüche gelöst. Bevorzugte Weiterbildungen sind Gegenstand der abhängigen Ansprüche.

Ein Aspekt der Erfindung umfasst ein Verfahren zum Filtern von in Datenpaketen verpackten Infrastrukturbeschreibungsnachrichten nach Anspruch 1.

Dem angegebenen Verfahren liegt die Überlegung zugrunde, dass in einem Fahrzeug-Ad-Hoc-Netzwerk Nachrichten versendet werden, um Informationen unter den Teilnehmern zu verteilen. Grundsätzlich kann dabei zwischen zwei Arten von Informationen unterschieden werden.

Mit einer ersten Art von Informationen, die nicht Teil der beanspruchten Erfindung ist, soll ein Teilnehmerknoten des Fahrzeug-Ad-Hoc-Netzwerkes auf sich aufmerksam machen und anderen Teilnehmern grundsätzlich seine Position melden. Derartige Nachrichten sollen nachstehend Positionsbeschreibungsnachrichten genannt werden, für die beispielsweise im europäischen Standard ETSI EN 302 637-2 eine Form definiert ist, mit der sich diese erste Art von Informationen unter den Teilnehmerknoten standardisiert verteilen lässt. Im europäischen Standard wird eine Positionsbeschreibungsnachricht CAM für *"Cooperative Awareness Message"* genannt, die optional weitere Informationen zum versendenden Teilnehmerknoten wie Geschwindigkeit, Fahrrichtung, und so weiter tragen kann.

Der in Positionsbeschreibungsnachrichten getragenen ersten Art von Informationen steht grundsätzlich die zweite Art von Informationen gegenüber, die die Umgebung beschreiben, in der sich ein Teilnehmerknoten befindet. Diese Umgebung wird durch die Infrastruktur definiert und kann verschiedene Zustände einnehmen. Unter Informationen, die die Infrastruktur beschreiben soll dabei einerseits Informationen fallen, die Navigationsebene als auch die Fahrbahnführungsebene auf der Straße betreffen. Hierunter fallen Straßenverlauf, Verkehrszeichen, aber auch Staus, Verkehrsunfälle, Liegenbleiber, Zustände der Verkehrszeichen, wie Ampelzustände, u.s.w. Zusätzlich soll unter die Infrastruktur auch das Fahrzeug-Ad-Hoc-Netzwerk selbst fallen, über das der Teilnehmerknoten seine Nachrichten versenden kann. Diese Art von zweiten Informationen sollen in nachstehend Infrastrukturbeschreibungsnachrichten genannten Nachrichten getragen werden, von denen eine Vielzahl verschiedener Typen definiert werden können.

Als Beispiel für eine erfindungsgemäße Infrastrukturbeschreibungsnachricht definiert der europäische Standard ETSI EN 302 637-3 sogenannte DENM genannte Decentralized Environmental Notification Messages, mit denen ein Teilnehmerknoten des Fahrzeug-Ad-Hoc-Netzwerkes Informationen zum Straßenzustand an andere Teilnehmerknoten übermitteln kann. Dieser Straßenzustand kann sowohl die Navigationsebene als auch Fahrbahnführungsebene beispielsweise mit Staumeldungen, Unfallmeldungen oder dergleichen betreffen. Mit sogenannten MAP- oder TOPO-Nachrichten können unter den Teilnehmerknoten des Fahrzeug-Ad-Hoc-Netzwerkes Informationen versendet werden, die die Infrastruktur in Form der Topologie der Straße beschreiben können. Mit sogenannten SPAT-Nachrichten kann die Infrastruktur in Form von Zuständen von Lichtsignalanlagen wie Ampeln auf der Straße beschrieben werden. Mit sogenannten SA-Nachrichten genannten Service Announcement Nachrichten kann unter den Teilnehmerknoten die Infrastruktur in Form von Beschreibungen zum Angebot des Fahrzeug-Ad-Hoc-Netzwerkes geschrieben werden. So kann beispielsweise auf Dienste hingewiesen werden, die in der Regel auf separaten Kanälen abgewickelt werden.

Die Bearbeitung von Infrastrukturbeschreibungsnachrichten ist vergleichsweise rechenintensiv, anders als in den oben genannten Positionsinformationsnachrichten zusätzlich noch die die Infrastruktur beschreibende Information ausgewertet und entsprechend darauf reagiert werden muss. Das kann in Hochlastsituationen des Fahrzeug-Ad-Hoc-Netzwerkes dazu führen, dass sicherheitsrelevante Nachrichten nicht rechtzeitig verarbeitet werden, wenn nicht ausreichend Rechenressourcen zur Verfügung stehen. Alternativ könnte zwar das Kommunikationssystem mit seinen Rechenressourcen auf den Extremfall der Hochlastsituation ausgelegt werden, aus wirtschaftlicher Sicht ist dieser Ansatz aber eher abzulehnen.

Im Rahmen des angegebenen Verfahrens wird daher ein anderer Weg beschritten und vorgeschlagen, die Infrastrukturbeschreibungsnachrichten basierend auf einem vorbestimmten Kriterium auszufiltern, das eine Reaktionsnotwendigkeit für eine empfangene Infrastrukturbeschreibungsnachricht beschreibt.

Das vorbestimmte Kriterium für die Reaktionsnotwendigkeit kann sich aus verschiedenen Gesichtspunkten ergeben. Empfängt ein Teilnehmerknoten beispielsweise eine Infrastrukturbeschreibungsnachricht zum wiederholten Mal, dann kann von einer niedrigen Reaktionsnotwendigkeit ausgegangen werden, weil die Information der Infrastrukturbeschreibungsnachricht für den Teilnehmerknoten redundant ist. Ein derartiger Ansatz wird erfindungsgemäß bei den oben genannten MAP- und TOPO-Nachrichten verfolgt, da sich die mit diesen Nachrichten beschriebene Topologie der Straße beziehungsweise Umgebung kaum bis gar nicht ändert. Ähnlich wird alternativ oder ergänzend auch mit den anderen Nachrichten, wie beispielsweise den DENMs verfahren, wenn diese beispielsweise zum Ausgleich von Übertragungsfehlern aus Sicherheitsgründen einen Unfall zum wiederholten Male melden. Infrastrukturbeschreibungsnachrichten können auch aufgrund paralleler Hopping-Pfade gedoppelt und damit mehrfach empfangen werden.

Das vorbestimmte Kriterium für die Reaktionsnotwendigkeit kann erfindungsgemäß auch zeitabhängig ausgelegt werden. So wird für die oben genannten SPAT-Nachrichten eine Zeitspanne konfiguriert, im Rahmen derer eingehende SPAT-Nachrichten eines Verbundes an Lichtsignalanlagen gefiltert und damit ignoriert werden, wenn von diesem Verbund bereits eine SPAT-Nachricht empfangen wurde. Nach der Zeitspanne kann eine eingehende SPAT-Nachricht desselben Verbundes an Lichtsignalanlage erneut auf seine Reaktionsnotwendigkeit und damit Relevanz hin untersucht werden.

Als eine weitere Möglichkeit, die nicht Teil der beanspruchten Erfindung ist, ist vorgesehen bestimmte Typen von Infrastrukturbeschreibungsnachrichten unter bestimmten Umständen, wie beispielsweise in der oben genannten Hochlastsituation vollständig zu filtern und damit zu ignorieren, weil diese nicht sicherheitsrelevant sind und damit immer davon ausgegangen werden kann, dass keine Reaktionsnotwendigkeit besteht.

Selbstverständlich können in dem vorbestimmten Kriterium für die Reaktionsgeschwindigkeit auch Priorisierungen berücksichtigt werden innerhalb eines bestimmten Nachrichtentyps die Informationen bewerten. Im Transportheader einer oben genannten DENM ist beispielsweise bereits der Typ (Wetterwarnung, Einsatzfahrzeug, ...) erkennbar. Auf Basis einer Rückmeldung von den im Fahrzeug aktiven Funktionen über aktuell relevante Typen (ergibt sich aus überhaupt ausgewerteten Typen und der Priorisierung verschiedener Funktionen untereinander) erfolgt eine Klassifikation in relevante und aktuell nicht relevante DENMs. In Hochlastsituationen kann eine lokale Weiterleitung derartiger Infrastrukturbeschreibungsnachrichten mit niederprioritärer Information unterbleiben.

Um das vorbestimmte Kriterium zur Reaktionsnotwendigkeit festzulegen, sollte aber zunächst die Reaktionsnotwendigkeit selbst festgelegt werden.

In einer Weiterbildung des angegebenen Verfahrens beschreibt die Reaktionsnotwendigkeit wenigstens ein Potential, mit der der empfangende Teilnehmerknoten auf die in der Infrastrukturbeschreibungsnachricht enthaltene Zustandsbeschreibung reagieren. Das heißt, dass eine Reaktion des Teilnehmerknotens überhaupt nicht notwendig ist, wenn gar keine Möglichkeit besteht, auf die in einer Infrastrukturbeschreibungsnachricht gemeldeten Information zu reagieren. Das ist beispielsweise der Fall, wenn ein Unfall gemeldet wird, der empfangende Teilnehmerknoten aber ebenfalls ein Beteiligter des Unfalls ist. Dabei kann das vorbestimmte Kriterium eine Grenzbedingung umfassen, mit der der empfangende Teilnehmerknoten auf die in der Infrastrukturbeschreibungsnachricht enthaltene Zustandsbeschreibung reagieren soll.

In einer anderen Weiterbildung des angegebenen Verfahrens beschreibt die Reaktionsnotwendigkeit wenigstens eine Aktualität für die Zustandsbeschreibung in der Infrastrukturbeschreibungsnachricht. Bewegt sich beispielsweise ein Teilnehmerknoten in Form eines Fahrzeuges von dem zuvor erwähnten Unfall weg, dann ist eine entsprechende, den Unfall meldende Infrastrukturbeschreibungsnachricht selbst dann für das Fahrzeug nicht relevant, wenn das Fahrzeug sich noch in unmittelbarer Nähe zu diesem Unfall befindet. Alternativ oder zusätzlich könnte die Aktualität für die Zustandsbeschreibung enthalten, ob die gleiche Infrastrukturbeschreibungsnachricht schon einmal empfangen wurde. In diesem Falle könnte die empfangene Infrastrukturbeschreibungsnachricht per se als redundant aussortiert werden. Das vorbestimmte Kriterium kann dann eine Grenzbedingung für die die Zustandsbeschreibung in der Infrastrukturbeschreibungsnachricht beschreibende Aktualität umfassen.

In einer noch anderen Weiterbildung des angegebenen Verfahrens enthält die Reaktionsnotwendigkeit wenigstens einen Abstand des empfangenden Teilnehmerknotens zu einer in der Zustandsbeschreibung der Infrastrukturbeschreibungsnachricht enthaltenen Position. Auf diese Weise können beispielsweise Infrastrukturbeschreibungsnachrichten mit Meldungen aussortiert werden, die sich auf zu weit vom Teilnehmerknoten entferne Ereignisse und/oder Topologien beziehen, als dass eine Reaktion durch den Teilnehmerknoten notwendig wäre. Dabei kann das vorbestimmte Kriterium eine Grenzbedingung für den Abstand des empfangenden Teilnehmerknotens zu der in der Zustandsbeschreibung der Infrastrukturbeschreibungsnachricht enthaltenen Position enthalten.

Gemäß einem weiteren Aspekt der Erfindung ist eine Filtervorrichtung nach Anspruch 9 eingerichtet, ein Verfahren nach einem der vorstehenden Ansprüche durchzuführen.

Erfindungsgemäß weist die Filtervorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Empfänger für ein Fahrzeug zum Empfangen von in Datenpaketen verpackten Nachrichten mit einem Übertragungssignal in einem Fahrzeug-Ad-Hoc-Netzwerk:
- eine Antenne zum Empfangen des Übertragungssignals,
- eine Filtervorrichtung nach Anspruch 9 zum Filtern wenigstens eines Teils der Datenpakete aus dem Übertragungssignals, und
- eine Darstellungsvorrichtung zum Extrahieren der Nachrichten aus den gefilterten Datenpaketen.

Gemäß einem anderen Aspekt der Erfindung umfasst ein Fahrzeug einen der angegebenen Empfänger.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines auf einer Straße fahrenden Fahrzeuges,
Fig. 2 eine Prinzipdarstellung des Fahrzeuges der Fig. 1,
Fig. 3 eine Prinzipdarstellung eines Fahrzeug-Ad-Hoc-Netzwerkes, an dem das Fahrzeug der Fig. 1 und 2 teilnehmen kann, und
Fig. 4 eine Prinzipdarstellung von in dem Fahrzeug-Ad-Hoc-Netzwerk der Fig. 3 übertragenen Datenpaketen zeigen.

In den Figuren werden gleiche technische Elemente mit gleichen Bezugszeichen versehen und nur einmal beschrieben.

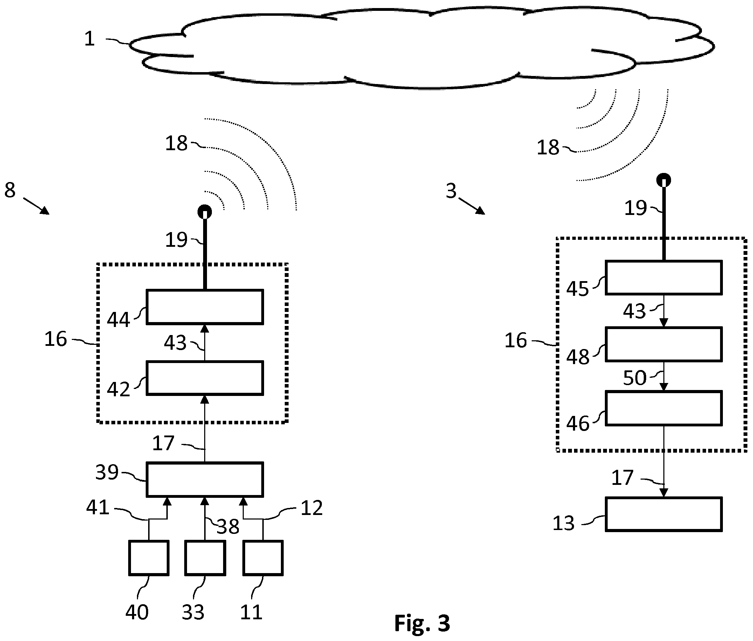

Ein Beispiel zum besseren Verständis der Erfindung, das nicht Teil der beanspruchtne Erfindung ist, betrifft ein Netzwerkprotokoll für ein in Fig. 3 gezeigtes Fahrzeug-Ad-Hoc-Netzwerk, das nachstehend der Einfachheit halber Car2X-Netzwerk 1 genannt wird. Zur besseren Verständlichkeit des technischen Hintergrundes zu diesem Car2X-Netzwerk 1 soll zunächst ein nicht einschränkendes Anwendungsbeispiel zu diesem Car2X-Netzwerk 1 gegeben werden, bevor auf technische Einzelheiten zu diesem näher eingegangen wird.

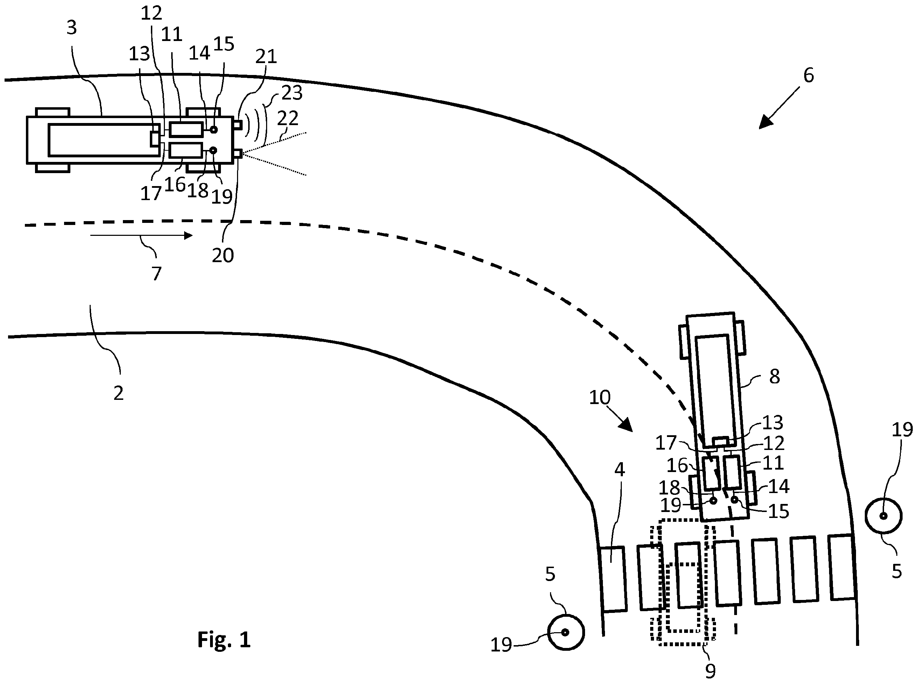

Es wird daher auf Fig. 1 Bezug genommen, die eine Prinzipdarstellung eines auf einer Straße 2 fahrenden Fahrzeuges 3 zeigt.

In dem Beispiel zum besseren Verständnis der Erfindung soll sich auf der Straße 2 eine Fußgängerüberführung 4 befinden, an der mittels einer Ampel 5 geregelt wird, ob das Fahrzeug 4 auf der Straße 2 die Fußgängerüberführung 4 überqueren darf oder ein nicht weiter dargestellter Fußgänger auf der Fußgängerüberführung 4 die Straße 2. Zwischen der Fußgängerüberführung 4 und der Ampel 5 befindet sich im Rahmen des Beispiels zum besseren Verständnis der Erfindung ein Hindernis in Form einer Kurve 9, die die Fußgängerüberführung 4 dem Fahrer des Fahrzeuges 3 sowie einer noch zu beschreibenden Umfeldsensorik des Fahrzeuges 3 gegenüber verdeckt.

In einer Fahrtrichtung 7 vor dem Fahrzeug 3 ist in Fig. 1 ein weiteres Fahrzeug 8 dargestellt, das mit einem gepunktet dargestellten Fahrzeug 9 auf der Fußgängerüberführung 4 in einen Verkehrsunfall 10 verwickelt ist und die Fahrspur in Fahrtrichtung 7 des Fahrzeuges 3 blockiert.

Die Fußgängerüberführung 4 und der Verkehrsunfall 10 stellen Gefahrensituationen auf der Straße 2 dar. Übersieht der Fahrer des Fahrzeuges 3 die Fußgängerüberführung 4 und hält vor dieser damit regelwidrig nicht an, so könnte er einen die Fußgängerüberführung 4 überquerenden Fußgänger erfassen, der beim Überqueren der Fußgängerüberführung 4 auf das regelkonforme Verhalten des Fahrers des Fahrzeuges 3 vertraut. In beiden Gefahrensituationen muss der Fahrer des Fahrzeuges 3 das Fahrzeug 3 anhalten, um eine Kollision mit dem Gefahrenobjekt in der Gefahrensituation, also dem Fußgänger und/oder dem weiteren Fahrzeug 8 zu vermeiden. Hierzu kann das Car2X-Netzwerk 1 verwendet werden, worauf an späterer Stelle näher eingegangen wird.

Das Fahrzeug 3 weist in dem Beispiel zum besseren Verständnis der Erfindung einen Empfänger 11 für ein globales Satellitennavigationssystem, nachstehend GNSS-Empfänger 11 genannt auf, über den das Fahrzeug 3 in einer an sich bekannten Weise Positionsdaten in Form seiner absoluten geographischen Lage 12 bestimmen und beispielsweise im Rahmen eines Navigationssystems 13 nutzen kann, um diese auf einer nicht weiter dargestellten geographischen Karten anzuzeigen. Entsprechende Signale 14 des Globalen Satellitennavigationssystems, nachstehend GNSS-Signale 14 genannt, können beispielsweise über eine entsprechende GNSS-Antenne 15 empfangen und in an sich bekannter Weise an den GNSS-Empfänger 11 weitergeleitet werden.

Das Fahrzeug weist in dem Beispiel zum besseren Verständnis der Erfindung ferner einen Transceiver 16 auf, über den das Fahrzeug 3 als Knoten am Car2X-Netzwerk 1 teilnehmen und mit anderen Knoten, wie beispielsweise dem weiteren Fahrzeug 8 und/oder der Ampel 5 nachstehend Car2X-Nachrichten 17 genannte Nachrichten austauschen kann. Dieser Transceiver 16 soll zur Abgrenzung gegenüber dem GNSS-Empfänger 11 nachstehend Car2X-Transceiver 16 genannt werden.

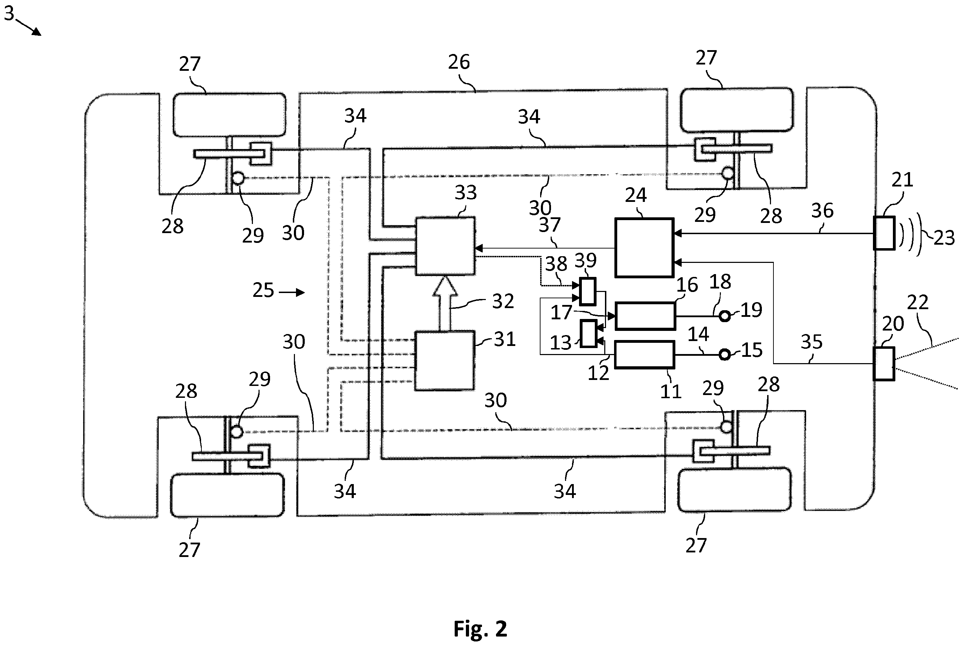

In den über das Car2X-Netzwerk 1 ausgetauschten Car2X-Nachrichten 17, können die einzelnen Knoten 3, 5, 8 untereinander verschiedene Informationen beschreibende Daten austauschen mit denen beispielsweise die Verkehrssicherheit auf der Straße 2 erhöht werden kann. Ein Beispiel für die Informationen, die mit den Daten in den Car2X-Nachrichten 17 ausgetauscht werden können, wäre die über den GNSS-Empfänger 11 bestimmte absolute geographische Lage 12 des jeweiligen Knotens 3, 5, 8 des Car2X-Netzwerkes 1. Derartige Daten können auch als Positionsdaten bezeichnet werden. Ist der die geographische Lage 12 empfangende Knoten 3, 5, 8 des Car2X-Netzwerkes 1 ein Fahrzeug, wie beispielsweise das nicht am Verkehrsunfall 10 beteiligte Fahrzeug 3 und das am Verkehrsunfall 10 beteiligte Fahrzeug 8 dann kann die über das Car2X-Netzwerk 1 empfangene geographische Lage 12 beispielsweise auf dem Navigationssystem 13 des empfangenden Fahrzeuges 3, 8 zur Darstellung beispielsweise der Verkehrsbewegung verwendet werden. Wird neben der absoluten geographischen Lage 12 auch der Verkehrsunfall 10 als Information mit den Daten in der Car2X-Nachricht 17 beschrieben, so können bestimmte Verkehrssituationen, wie beispielsweise der Verkehrsunfall 10 auf Navigationssystem 13 konkreter dargestellt werden. Auf weitere mögliche mit den Car2X-Nachrichten 17 austauschbare Informationen wird später im Rahmen der Fig. 2 näher eingegangen.

Zum Austausch der Car2X-Nachrichten 17 moduliert der Car2X-Transceiver 16 entweder eine Car2X-Nachricht 17 auf ein nachstehend Car2X-Signal 18 genanntes Übertragungssignal und versendet es über eine nachstehend Car2X-Antenne 19 genannte Antenne an die anderen Knoten 3, 5, 8 im Car2X-Netzwerk 1 oder er empfängt über die Car2X-Antenne 19 ein Car2X-Signal 18 und filtert aus diesem die entsprechende Car2X-Nachricht 17 heraus. Darauf wird an späterer Stelle im Rahmen der Fig. 3 näher eingegangen. In Fig. 1 ist dabei dargestellt, dass der Car2X-Transciever 16 eine Car2X-Nachricht 17 an das Navigationssystem 13 unter der Annahme ausgibt, dass diese in der oben beschriebenen Weise Informationen enthält, die auf diesem darstellbar sind. Das ist jedoch nicht einschränkend zu verstehen. Insbesondere kann zweckmäßigerweise auch der GNSS-Empfänger 11 direkt oder, wie in Fig. 2 gezeigt, indirekt mit dem Car2X-Transceiver 16 verbunden sein, um die eigene absolute geographische Lage 12 im Car2X-Netzwerk 1 zu versenden.

Die Struktur der Car2X-Nachricht 17 sowie des Car2X-Signals 18 und damit der Aufbau des Car2X-Netzwerkes können in einem Kommunikationsprotokoll definiert werden. Es gibt bereits derartige Kommunikationsprotokolle länderspezifisch unter anderem im Rahmen der ETSI TC ITS bei ETSI in Europa und im Rahmen der IEEE 1609 bei IEEE sowie bei SAE in den Vereinigten Staaten von Amerika. Weitere Informationen hierzu lassen sich in den genannten Spezifikationen finden.

Das Fahrzeug 3 kann optional noch die oben genannte Umfeldsensorik in Form einer Kamera 20 und eines Radarsensors 21 aufweisen. Mit der Kamera 20 kann das Fahrzeug 3 innerhalb eines Bildwinkels 22 ein Bild einer Ansicht aufnehmen, die in Fahrtrichtung 7 des Fahrzeuges 3 betrachtet vor dem Fahrzeug 3 liegt. Zudem kann das Fahrzeug 3 mit dem Radarsensor 21 und entsprechenden Radarstrahlen 23 in Fahrtrichtung 7 des Fahrzeuges 3 betrachtet Objekte erkennen und in einer an sich bekannten Weise den Abstand zum Fahrzeug 3 bestimmen.

Um die mit einer Car2X-Nachricht 17 übertragbaren Informationen zu konkretisieren, soll nachstehend zunächst auf den Aufbau des Fahrzeuges 3 und des weiteren Fahrzeuges 5 beispielhaft anhand des Fahrzeuges 3 eingegangen werden. Das Fahrzeug 3 besitzt verschiedene Sicherheitskomponenten von denen in Fig. 2 ein elektronischer Bremsassistent 24, EBA 24 genannt, und eine an sich bekannte Fahrdynamikregelung 25 gezeigt ist. Während der DE 10 2004 030 994 A1 Details zum EBA 24 entnommen werden können, können der DE 10 2011 080 789 A1 Details zur Fahrdynamikregelung 25 entnommen werden.

Das Fahrzeug 3 umfasst ein Chassis 26 und vier Räder 27. Jedes Rad 27 kann über eine ortsfest am Chassis 26 befestigte Bremse 28 gegenüber dem Chassis 26 verlangsamt werden, um eine Bewegung des Fahrzeuges 3 auf der Straße 2 zu verlangsamen.

Dabei kann es in einer dem Fachmann bekannten Weise passieren, dass das die Räder 27 des Fahrzeugs 3 ihre Bodenhaftung verlieren und sich das Fahrzeug 3 sogar von einer beispielsweise über ein nicht weiter gezeigtes Lenkrad vorgegebenen Trajektorie durch Untersteuern oder Übersteuern wegbewegt. Dies wird durch die Fahrdynamikregelung 25 vermieden.

In dem Beispiel zum besseren Verständnis der Erfindung weist das Fahrzeug 4 dafür Drehzahlsensoren 29 an den Rädern 27 auf, die eine Drehzahl 30 der Räder 27 erfassen.

Basierend auf den erfassten Drehzahlen 30 kann ein Regler 31 in einer dem Fachmann bekannten Weise bestimmen, ob das Fahrzeug 3 auf der Fahrbahn rutscht oder sogar von der oben genannten vorgegebenen Trajektorie abweicht und entsprechend mit einem an sich bekannten Reglerausgangssignal 32 darauf reagieren. Das Reglerausgangssignal 32 kann dann von einer Stelleinrichtung 33 verwendet werden, um mittels Stellsignalen 34 Stellglieder, wie die Bremsen 28 anzusteuern, die auf das Rutschen und die Abweichung von der vorgegebenen Trajektorie in an sich bekannter Weise reagieren.

Der EBA 24 kann über die Kamera 20 erfasste Bilddaten 35 und über den Radarsensor 21 erfasste Abstandsdaten 36 zu Objekten wie Fahrzeugen in Fahrtrichtung 7 vor dem Fahrzeug 3 auswerten und basierend darauf eine Gefahrensituation erfassen. Diese könnte beispielsweise gegeben sein, wenn sich ein Objekt vor dem Fahrzeug 3 diesem mit einer zu hohen Geschwindigkeit nähert. In einem solchen Fall könnte der EBA 24 über ein Notbremssignal 37 die Stelleinrichtung 33 einweisen, über die Stellsignale 34 eine Notbremsung mit den Bremsen 28 auszuführen.

Jedes Mal, wenn der EBA 24 oder die Fahrdynamikregelung 25 über die Stelleinrichtung 33 in das Fahrzeug 4 eingreifen, kann beispielsweise die Stelleinrichtung 33 ein in Fig. 2 gepunktet dargestelltes Berichtssignal 38 ausgeben. Zweckmäßigerweise sollte das Berichtssignal 38 konkretisieren, ob der Eingriff durch den EBA 24 oder die Fahrdynamikregelung 25 bedingt war. Ein derartiges Berichtssignal 38 kann von einer beliebigen Instanz im Fahrzeug 3, also beispielsweise auch vom Regler 31 der Fahrdynamikregelung 25 erzeugt werden. Eine Nachrichtenerzeugungseinrichtung 39 könnte dann basierend auf dem Berichtssignal 38, der absoluten geographischen Lage 12 und einem in Fig.3 gezeigten aus einem Zeitgeber 40 ausgegebenen Zeitstempel 41 eine Car2X-Nachricht 17 erzeugen, mit der der Eingriff des EBAs 24 und/oder der Fahrdynamikregelung 25 als Information über das Car2X-Netzwerk 1 den anderen Knoten 5, 8 berichtet werden kann. Die so erzeugte Car2X-Nachricht 17 könnte dann über die Car2X-Antenne 19 im Car2X-Netzwerk 1 versendet werden.

In dem Beispiel der Fig. 1 wurde ausgeführt, dass die in den Car2X-Nachrichten 17 ausgetauschten Information über die absolute geographische Lage 12 der einzelnen Knoten 3, 5, 8 und/oder über Ereignisse wie der Verkehrsunfall 10 und/oder wie ein Eingriff des EBAs 24 und/oder der Fahrdynamikregelung 25 auf dem Navigationssystem 13 zur Orientierung des Fahrers dargestellt werden könnten. Alternativ oder zusätzlich können basierend auf den in den Car2X-Nachrichten 17 ausgetauschten Informationen aber auch aktiv Stellsignale 34 beispielsweise mit der Stelleinrichtung 33 generiert werden. Wird beispielsweise der Eingriff des EBA 24 als Information in einer Car2X-Nachricht 17 übermittelt, könnte beispielsweise basierend auf dem Empfang dieser Car2X-Nachricht 17 automatisch der EBA 24 in dem empfangenden Fahrzeug 3, 8 ausgelöst werden.

Nachstehend soll anhand der Fig. 3 die Übertragung einer Car2X-Nachricht 17 über das Car2X-Netzwerk 1 erläutert werden, das in Fig. 3 der Übersichtlichkeit halber mit einer Wolke angedeutet ist. Als Inhalt der Car2X-Nachricht 17 soll beispielsweise ein durch die Stelleinrichtung 33 mit dem Berichtssignal 38 berichteter Eingriff durch den EBA 24 in das am Verkehrsunfall 10 beteiligte Unfall-Fahrzeug 8 angenommen werden.

Wie bereits erläutert erzeugt die Nachrichtenerzeugungseinrichtung 39 basierend auf dem Berichtssignal 38, der absoluten geographischen Lage 12 und dem Zeitstempel 41 die Car2X-Nachricht 17 gemäß dem oben erwähnten Kommunikationsprotokoll. Die Nachrichtenerzeugungseinrichtung 39 kann dabei prinzipiell auch Teil des Car2X-Transceivers 16 sein.

Aus der Car2X-Nachricht 17 werden in dem Car2X-Transceiver 16 des Unfall-Fahrzeuges 8 in einer Datenpaketerzeugungseinrichtung 42 Datenpaketen 43 erzeugt. Durch das Erzeugen von Datenpaketen 43 können Car2X-Nachrichten 17 aus verschiedenen Anwendungen in dem Unfall-Fahrzeug 8 zu einem einzigen Datenstrom zusammengefasst werden, um das Car2X-Signal 18 zu erzeugen. Die Datenpaketerzeugungseinrichtung 42 entspricht daher einer Netzwerk- und Transportschicht (eng. network and transport layer), deren Aufgabe es bekanntlich ist die Netzwerkdaten aus verschiedenen Anwendungen zu routen. Der Aufbau der Datenpaketerzeugungseinrichtung 42 ist von der oben genannten Spezifikation des Kommunikationsprotokolls für das Car2X-Netzwerk 1 abhängig.

Die generierten Datenpakete 43 werden in einer Modulationseinrichtung 44 auf das Car2X-Signal 18 aufmoduliert und im Car2X-Netzwerk 1 drahtlos versendet. Die Modulationseinrichtung 44 entspricht daher einer Schnittstellenschicht, deren Aufgabe es ist, das Unfall-Fahrzeug 8 physikalisch an das Car2X-Netzwerk 1 anzubinden. Auch der Aufbau der Modulationseinrichtung 44 ist von der oben genannten Spezifikation des Kommunikationsprotokolls für das Car2X-Netzwerk 1 abhängig.

Auf Seiten des nicht am Verkehrsunfall 10 beteiligten Fahrzeuges 3 kann das vom Unfall-Fahrzeug 8 versendete Car2X-Signal 18 dann über die Car2X-Antenne 19 empfangen werden.

Um die Car2X-Nachricht 17 aus dem Car2X-Signal 18 zu extrahieren weist der Car2X-Transceiver 16 des Fahrzeuges 3 eine Demodulationseinrichtung 45 auf, die die senderseitige Modulation der Datenpakete 43 in an sich bekannter Weise rückgängig macht.

Entsprechend kann eine Nachrichtenextraktionseinrichtung 46 die Car2X-Nachrichten 17 aus den Datenpaketen 43 extrahieren und den Anwendungen im Fahrzeug 3, wie dem Navigationssystem 13 oder auch der Stelleinrichtung 33 zur Verfügung stellen. Letztendlich stellen die Demodulationseinrichtung 45 und die Nachrichtenextraktionseinrichtung 46 die empfangsseitigen Gegenstücke entsprechend der oben genannten Netzwerk und Transportschicht und der Schnittstellenschicht dar und sind ebenfalls von der oben genannten Spezifikation des Kommunikationsprotokolls für das Car2X-Netzwerk 1 abhängig.

Zu Details der einzelnen Netzwerkschichten wird daher auf die einschlägigen Spezifikationen verwiesen.

Insbesondere in Hochlastsituationen, wenn sich auf der Straße 2 eine Vielzahl von Knoten 3, 5, 8 im Car2X-Netzwerk 1 befinden, müssen in den jeweiligen Knoten 3, 5, 8 zur Verarbeitung aller im Car2X-Netzwerk 1 versendeten Car2X-Nachrichten 17 entsprechend hohe Rechenressourcen freigehalten werden, um empfängerseitig die Verarbeitung aller Car2X-Nachrichten 17 innerhalb bestimmter Zeitschranken zu garantieren. Die Bereitstellung dieser hohen Rechenressourcen ist mit einem entsprechend hohen Kostenaufwand verbunden, der im Rahmen des Beispiels zum besseren Verständnis der Erfindung durch die Einführung eines Vorfilters 48 reduziert werden soll.

Die Idee hinter dem Vorfilter 48 ist es, potentiell irrelevante Car2X-Nachrichten 17 möglichst frühzeitig auszusortieren, um zu vermeiden, dass diese durch ein Element in der Empfangskette unnötigerweise verarbeitet werden müssen, weil sie ohnehin für den Empfangsknoten irrelevante Informationen enthalten.

Hierzu wird im Rahmen des Beispiels zum besseren Verständnis der Erfindung erkannt, dass sich die die Car2X-Nachrichten 17 grundsätzlich in Positionsinformationsnachrichten und in Infrastrukturbeschreibungsnachrichten unterscheiden lassen.

Während die Teilnehmerknoten 3, 5, 8 des Car2X-Netzwerkes mit Car2X-Nachrichten 17 in Form von Positionsinformationsnachrichten auf sich aufmerksam machen und anderen Teilnehmerknoten 3, 5, 8 grundsätzlich ihre geographische Lage 12 zur Koordination melden können, können die Teilnehmerknoten 3, 5, 8 mit Car2X-Nachrichten 17 in Form von Infrastrukturbeschreibungsnachrichten die Umgebung beschreiben, in der sie sich befinden. Diese Umgebung wird durch die Infrastruktur definiert und kann verschiedene Zustände einnehmen. Unter die Infrastruktur soll dabei umfassend nicht nur die Umgebung, wie beispielsweise die Straße 2, verstanden werden, in der sich der Teilnehmerknoten 3, 5, 8 örtlich befinden kann, sondern auch das Car2X-Netzwerk 1, über das der Teilnehmerknoten 3, 5, 8 seine Car2X-Nachrichten 17 versenden kann. Während die Straße 2 betreffende Infrastrukturbeschreibungsnachrichten zur Steuerung eines Teilnehmerknotens 3, 8 in Form eines Fahrzeuges auf Navigationsebene und/oder auf Fahrbahnführungsebene verwendet werden können, das Car2X-Netzwerk 1 betreffende Infrastrukturbeschreibungsnachrichten zur Steuerung und/oder Signalisierung von Informationsflüssen im Car2X-Netzwerk 1 dienen.

Eine typische Infrastrukturbeschreibungsnachricht ist die im Standard ETSI EN 302 637-3 definierte sogenannte DENM genannte Decentralized Environmental Notification Messages, mit denen ein Teilnehmerknoten 3, 5, 8 des Car2X-Netzwerkes 1 Informationen zum Straßenzustand an andere Teilnehmerknoten 3, 5, 8 übermitteln kann.

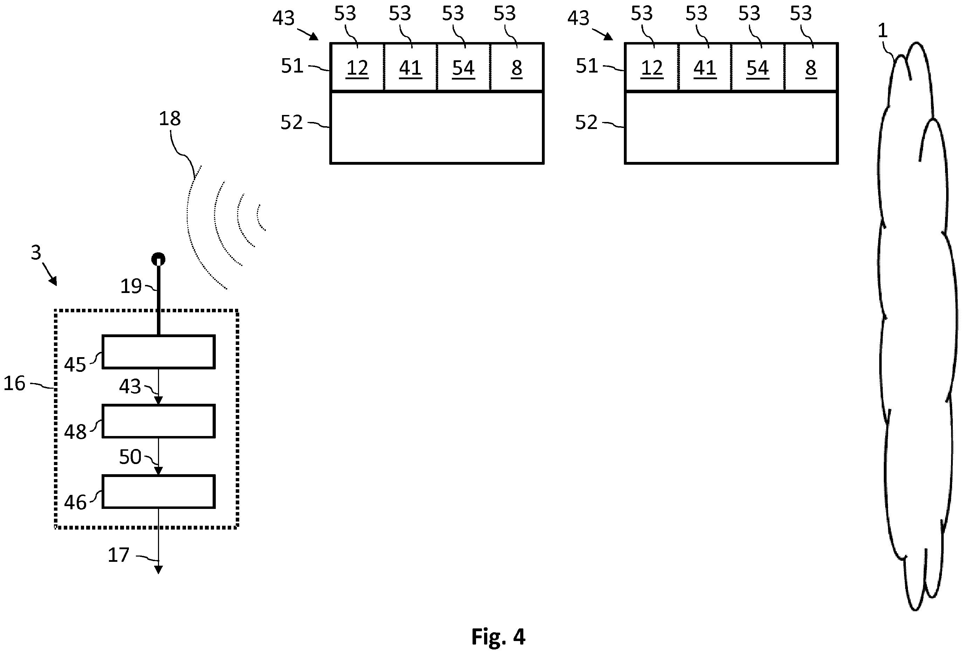

Im Rahmen einer anhand von Fig. 4 nachstehend diskutierten Ausführung soll angenommen werden, dass das nicht am Unfall beteiligte Fahrzeug 3 der Fig. 1 vom Unfallfahrzeug 8 zwei Datenpakete 43 empfängt, in denen je eine der zuvor genannte DENM als Car2X-Nachricht 17 getragen ist, die beide über den Unfall 10 berichten sollen. Jede Nachricht umfasst dabei einen Nachrichtenkopf 51, auch Header genannt, und einen Nachrichtenkörper 52 mit der die eigentlich interessierende Information und damit die Car2X-Nachricht 17 trägt. Die Daten des Nachrichtenkörpers 52 werden auch Payloaddaten genannt.

Ziel des Filters 48 ist es, die Datenpakte 43 beim Empfang zu filtern, ohne dass die Payloaddaten aus dem Nachrichtenkörper 52 angesehen werden müssen. Zwar wäre es denkbar auch einen Teil der Payloaddaten 52 bei der Filterung mitzuberücksichten, je weiter jedoch ein Datenpaket 43 im Filter 48 zur Entscheidung über die Filterung entpackt werden muss, desto rechenaufwändiger ist die Filterung, was dem eigentlichen Ziel der Filterung, Rechenressourcen zu sparen, zuwiderläuft. Im vorliegenden Fall soll daher der Nachrichtenkörper 52 unberücksichtigt bleiben und die Filterung nur basierend auf dem Nachrichtenkopf 51 durchgeführt werden.

Der Nachrichtenkopf 52 eines eine Car2X-Nachricht 17 in Form einer DENM tragenden Datenpaketes 43 weist eine Vielzahl verschiedener Informationsvariablen 53 auf, mit denen sich vorbestimmte Angaben zur getragenen Car2X-Nachricht 17 machen lassen. Solche Angaben umfassen beispielsweise die geographische Lage 12 des Senders 8 der Car2X-Nachricht 17, die der Sender 8 beim Absenden der Car2X-Nachricht 17 hatte, den Zeitstempel 41 mit der Zeit beim Absenden der Car2X-Nachricht 17 und einen Nachrichtenidentifier 54, der die Art der Car2X-Nachricht 17 in beliebiger Weise genau qualifizieren kann. Auf diesen Nachrichtenidentifier 54 wird an späterer Stelle näher eingegangen. Schließlich können die Angaben noch einen Senderidentifier umfassen, der näher Informationen zum Sender 8 selbst beschreibt, beispielsweise, um was für einen Sender (Verkehrszeichen, Fahrzeug, ...) es sich handelt. Diese und weitere Angaben in den Informationsvariablen 53 des Nachrichtenkopfes 51 eines Datenpaketes 43 sind für Car2X-Nachrichten 17 in Form von DENMs beispielsweise im oben erwähnten Standard definiert, weshalb nachstehend nicht weiter darauf eingegangen werden soll.

Sendet nun das Unfallfahrzeug 8 über den Unfall 10 berichtende Car2X-Nachrichten 17 in Form von DENMS aus, dann kann das Filter 48 nach dem Empfang eines ersten Datenpaketes 43 mit einer über den Unfall 10 berichtenden Car2X-Nachricht 17 alle folgenden identisch empfangenden Datenpakete 43 mit über diesen Unfall 10 berichtendenden Car2X-Nachrichten 17 ausfiltern.

Empfängt das nicht am Unfall beteiligte Fahrzeug 3 beispielsweise zwei verschiedene Datenpakete 43, die beide über den Unfall 10 berichten Car2X-Nachricht 17, dann kann das im Filter 48 aus dem Nachrichtenidentifier 54 im Zusammenhang mit dem Senderidentifier (in Fig. 4 mit dem Bezugszeichen 8 für das Unfallfahrzeug versehen) gefolgert werden. Zudem wird sich bei dem Unfallfahrzeug 8 auch die geographische Lage 12 beim Absenden der Datenpakete 43 nicht ändern. Folglich kann das zweite Datenpaket 43 ohne entschlüsseln des Nachrichtenkörpers 52 als den Unfall 10 berichtende DENM erkannt werden, der jedoch aufgrund des bereits empfangenen ersten Datenpaketes 43 bekannt ist, weshalb das zweite Datenpaket 43 im Filter 48 unmittelbar als redundant verworfen werden kann. Als gefiltertes Datenpaket 50 braucht dann nur das erste Datenpacket 43 an die Nachrichtenextraktionseinrichtung 46 zur weiteren Bearbeitung ausgegeben werden.

In gleicher Weise können auch andere Datenpakete 43, wie beispielsweise das erste Datenpaket 43 als redundant ausgefiltert werden. Hierzu kann beispielsweise das Scenario angenommen werden, dass das nicht am Unfall 10 beteiligte Fahrzeug 3 gerade am Unfall 10 vorbeigefahren ist, sich aber noch in unmittelbarer Nähe zu diesen befindet. Dass über einen Unfall an sich berichtet wird, geht zunächst in unkonkreter Weise aus dem Nachrichtenidentifier 54 im Nachrichtenkopf 51 heraus hervor. Auch ist aus dem Nachrichtenkopf 51 die geographische Lage 12 des unspezifiziert bleibenden Unfalls bekannt. Weil das nicht am Unfall beteiligte Fahrzeug 3 jedoch am Unfall 10 vorbeigefahren ist, was beispielsweise aus der Fahrtrichtung 7 entnehmbar ist, kann das nicht am Unfall 10 beteiligte Fahrzeug 3 in dem nun vorliegenden Scenario auch das erste Datenpaket 43 unmittelbar als nicht relevant aussortieren, weil es aufgrund der sich vom Unfall 10 entfernten Fahrtrichtung 7 nicht mehr mit diesem kollidieren kann. Der Unfall 10 selbst muss dann nicht mehr aus dem Nachrichtenkörper 52 entpackt werden.

Dem Filtern im Filter 48 muss letztendlich eine Entscheidungsgrundlage gegeben werden, ab wann es ein Datenpaket 43 ohne Kenntnis der darin getragenen Infrastrukturbeschreibungsnachricht selbst als unrelevant einstufen kann. Die Entscheidungsgrundlage sollte basierend auf der Erkenntnis gewählt werden, dass eine Infrastrukturbeschreibungsnachricht in gewisser Weise durch die oben genannte Benachrichtigung bestimmter Zustände auf der Straße 2 und/oder im Car2X-Netzwerk 1 eine Reaktion der einzelnen Teilnehmerknoten 3, 5, 8 hervorrufen soll. Hierzu muss der in dem Datenpaket 43 berichtete Zustand auf der Straße 2 und/oder im Car2X-Netzwerk 1 auf den entsprechenden Teilnehmerknoten 3, 5, 8 aber einen entsprechenden Einfluss haben. Mit anderen Worten muss der in dem Datenpaket 43 berichtete Zustand auf der Straße 2 und/oder im Car2X-Netzwerk 1 eine Reaktion des empfangenden Teilnehmerknotens 3, 5, 8 erfordern. Wenn dies nicht der Fall ist, wenn also der Teilnehmerknoten 3, 5, 8 nicht auf den Zustand reagieren muss, dann ist das entsprechende, den Zustand berichtende Datenpaket 43 für den Teilnehmerknoten 3, 5, 8 gegenstandslos.

Es wird daher vorgeschlagen, als Entscheidungsgrundlage eine entsprechende Reaktionsnotwendigkeit zu definieren, mit der ein Teilnehmerknoten 3, 5, 8 auf einen in einem Datenpaket 43 mit einer Infrastrukturbeschreibungsnachricht berichteten Zustand reagieren muss. Kann davon ausgegangen werden, dass der Teilnehmerknoten 3, 5, 8 wie im zuvor erläuterten ersten Fall, den Inhalt der Infrastrukturbeschreibungsnachricht schon kennt, dann braucht diese auch nicht weiter verarbeitet zu werden, denn es kann davon ausgegangen werden, dass eine gegebenenfalls notwendige Reaktion schon eingeleitet wurde.

Nachstehend soll ein weiterer Aspekt der Erfindung erläutert werden, der ein Auswahlverfahren zur Reduzierung des Rechenaufwands eines Fahrzeug-zu-X-Kommunikationssystems betrifft.

Im Stand der Technik sind sogenannte Fahrzeug-zu-X-Kommunikationssysteme bekannt, die sowohl zur Übertragung verkehrsbezogener Daten als auch verschiedener Service-Daten, wie etwa Unterhaltungsanwendungen, ausgebildet sind. Die Fahrzeug-zu-X-Kommunikation basiert dabei sowohl auf dem Datenaustausch zwischen Fahrzeugen untereinander (Fahrzeug-zu-Fahrzeug-Kommunikation) als auch auf dem Datenaustausch zwischen Fahrzeugen und Infrastruktureinrichtungen (Fahrzeug-zu-Infrastruktur-Kommunikation). Aufgrund der hohen Anforderungen an die Zuverlässigkeit und Datensicherheit von mittels Fahrzeug-zu-X-Kommunikation übertragenen Informationen, werden derartige Informationen zusätzlich oftmals mit einer aufwändigen Sicherheitssignatur bzw. Datenverschlüsselung versehen.

Die Auswertung einer derartigen Sicherheitssignatur bzw. die Decodierung einer derartigen Datenverschlüsselung sind jedoch mit verhältnismäßig hohem Rechenaufwand verbunden. Hinzu kommt das Auftreten besonderer Situationen, wie etwa das Passieren einer vielbefahrenen innerstädtischen Kreuzung zur Hauptverkehrszeit, in denen eine derart große Anzahl an Fahrzeug-zu-X-Botschaften empfangen wird, dass eine Verarbeitung aller empfangenen Fahrzeug-zu-X-Botschaften ebenfalls nur durch das Bereitstellen einer vergleichsweise großen Rechenleistung möglich ist. Um den Rechenaufwand und damit die Beschaffungskosten für ein Rechenmodul eines derartigen Fahrtzeug-zu-X-Kommunikationssystems möglichst gering zu halten, sind im Stand der Technik weiterhin unterschiedliche Vorverarbeitungsverfahren bekannt, die unter allen empfangenen Fahrzeug-zu-X-Botschaften eine Auswahl der zu decodierenden Fahrzeug-zu-X-Botschaften treffen. Derartige Vorverarbeitungsverfahren beziehen sich jedoch nur auf die sogenannten Cooperative Awareness Messages (CAMs), die zwischen den Fahrzeugen untereinander ausgetauscht werden und nutzen entsprechend zur Vorverarbeitung Datenpakete, die typischerweise nur in CAMs enthalten sind.

Allgemein werden in der europäischen Fahrzeug-zu-X-Kommunikations-Standardisierung verschiedene Nachrichtentypen definiert. Bisherige Arbeiten zur Vorverarbeitung von empfangenen Daten konzentrieren sich, wie bereits beschrieben, weitgehend auf CAMs, da diese insbesondere in Situationen mit vielen Fahrzeugen den Großteil der empfangenen Pakete darstellen und aufgrund der direkten Beziehung zwischen Sender des Pakets und enthaltenen Informationen eine Vielzahl an Filtermöglichkeiten bzw. Vorverarbeitungsmöglichkeiten bieten.

Insbesondere in Bereichen mit vorhandener Fahrzeug-zu-X-Kommunikations-Infrastruktur, wie z.B. Ampelkreuzungen, ist jedoch auch eine signifikante Anzahl an weiteren Fahrzeug-zu-X-Botschaften der folgenden Arten zu erwarten:
- Decentralized Environmental Notification Message (DENM)
- Straßentopologie (MAP, früher als TOPO bezeichnet)
- Signal Phase and Timing (SPAT)
- Service Announcements (SA), insbesondere Service Channels, SCHs

Die Aufgabe des vorliegenden Aspekts der Erfindung ist es daher, den Rechenaufwand eines Fahrzeug-zu-X-Kommunikationssystems auch im Hinblick auf diese Arten von empfangenen Fahrzeug-zu-X-Botschaften zu vermindern.

Für die genannten Arten von Fahrzeug-zu-X-Botschaften sind erfindungsgemäß folgende Methoden der Vorverarbeitung vorgesehen:

### DENMs:

Im Netzwerkheader einer DENM ist das Zielgebiet dieser Nachricht ohne weiteren Dekodierungsaufwand erkennbar. Liegt die eigene Position, d.h. die Position des empfangenden Fahrzeugs bzw. Fahrzeug-zu-X-Kommunikationssystems nicht in diesem Gebiet, ist die Relevanz anzunehmenderweise gering, so dass diese Fahrzeug-zu-X-Botschaft nicht weiter bearbeitet und verworfen wird. Konkret bedeutet dies, dass eine Weiterleitung der Fahrzeug-zu-X-Botschaft von der Netzwerkschicht des Fahrzeug-zu-X-Kommunikationssystems an sogenannte Facilities bzw. Anwendungen bzw. Fahrzeugsysteme ausbleibt, insbesondere in Hochlastsituationen ausbleibt. Des Weiteren ist im Transportheader einer DENM ist bereits der Typ der DENM (z.B. Wetterwarnung, Einsatzfahrzeug, etc.) erkennbar. Auf Basis einer Statusmeldung der im Fahrzeug aktiven Facilities bzw. Anwendungen bzw. Fahrzeugsysteme über aktuell relevante Typen (dies ergibt sich aus überhaupt ausgewerteten Typen von DENMs und der Priorisierung verschiedener Fahrzeugsysteme untereinander) erfolgt eine Klassifikation in relevante und aktuell nicht relevante DENMs. In Hochlastsituationen kann in diesem Fall eine lokale Weiterleitung nicht relevanter DENMs innerhalb des Fahrzeug-zu-X-Kommunikationssystems unterbleiben, womit diese verworfen werden. Des Weiteren werden DENMs laut derzeitig bestehender Spezifikation ohne inhaltliche Updates periodisch wiederholt, um Übertragungsfehler auszugleichen. Diese Wiederholungen werden erfindungsgemäß ausgefiltert und die entsprechenden DENMs somit nicht verarbeitet bzw. verworfen.

Gleiches gilt für sogenannte Dopplungen, die durch parallele Übertragungs-Pfade bzw. sogenannte Hopping-Pfade entstehen.

### MAP/TOPO:

Von zur Fahrzeug-zu-X-Kommunikation befähigten Infrastrukturkomponenten wird die Straßentopologie an besonderen Orten, wie z.B. Kreuzungen, periodisch übertragen. Da sich diese Daten kaum bis gar nicht ändern, werden wiederholte Übertragungen bevorzugt ausgefiltert.

Zudem sind in einem Beispiel, das nicht Teil der beanspruchten Erfindung ist, folgende Methoden der Vorverarbeitung vorgesehen:

### SPAT:

Fahrzeug-zu-X-Botschaften, die Informationen über die aktuelle Phase und zukünftige Phasen von Lichtsignalanlagen enthalten, werden sowohl für Sicherheitsfunktionen (Rotlichtwarnung) als auch für Komfortfunktionen (Ampelphasenassistent) benötigt.

Eine Reduzierung der Last durch SPAT-Nachrichten erfolgt daher bevorzugt nur dann durch Ausfiltern von aktualisierten Nachrichten zu einem Verbund an Lichtsignalanlagen, wenn entsprechende Facilities bzw. Anwendungen bzw. Fahrzeugsysteme im Fahrzeug mitteilen, dass diese Anlagen für sie zurzeit nicht relevant sind. Nach Ablauf einer zu konfigurierenden Zeitspanne wird besonders bevorzugt wieder eine Nachricht weitergeleitet, um die Gültigkeit der Annahme der Nicht-Relevanz erneut zu prüfen. Ein geeignetes Fahrzeugsystem zur Beurteilung der Relevanz einer Ampelanlage ist beispielsweise ein Navigationssystem mit Routenplaner, welches erkennt, dass die Ampelanlage nicht auf der Route des Fahrzeugs liegt.

### SA:

Service Announcements beschreiben optionale Dienste, die in der Regel über separate Kanäle (Service Channels, SCHs) abgewickelt werden. In Hochlastsituationen werden diese SAs bevorzugt ausgefiltert, insbesondere vor der Komponente Network&Transport ausgefiltert, da SAs nicht sicherheitsrelevant sind und zu ihrer weiteren Verarbeitung in einer Hochlastsituation ohnehin keine ausreichende Rechenleistung zur Verfügung stehen würde.

### SCH:

Die Inhalte der über die Service Channels empfangenen Fahrzeug-zu-X-Botschaften sind optional, nicht sicherheitsrelevant und werden zudem nur bei Nutzung entsprechender Services benötigt. Im Standardfall wird daher bereits ein sogenannter Treiber zur Kommunikation verwendeten Hardwaremoduls, z.B. des WLAN-Chips, angewiesen, diese Fahrzeug-zu-X-Botschaften nicht an weitere Protokollschichtendes Fahrzeug-zu-X-Kommunikationssystems weiterzuleiten.

Bevorzugt erfolgt die Ausfilterung von Fahrzeug-zu-X-Botschaften frühestmöglich in der Datenverarbeitungsreihenfolge bzw. im Netzwerkstack. Wenn z.B. keine Weiterleitung durch die Komponente Network&Transport (Netzwerkschicht) an andere Kommunikationsteilnehmer notwendig ist, können Fahrzeug-zu-X-Botschaftenen bereits vor dieser Komponente verworfen werden (d.h. zwischen Access Technologies und Network&Transport oder in Einzelfällen direkt in den Access Technologies) . Andernfalls werden die Fahrzeug-zu-X-Botschaften bevorzugt danach, aber noch vor der Komponente Facilities, verworfen. Der Begriff "Lokale Weiterleitung" bezeichner im Sinne der Erfindung die Weiterleitung von Network&Transport an Facilities.

Die einzelnen Komponenten des Netzwerkstacks bzw. der Datenverarbeitungsreihenfolge entsprechen dabei bevorzugt der Spezifikation gemäß ETSI und C2C-CC.

Das Verfahren gemäß dem weiteren Aspekt der Erfindung führt somit zu dem Vorteil, dass durch die frühzeitige Filterung von Fahrzeug-zu-X-Spezialnachrichten die benötigte Rechenleistung und die zu verarbeitende Datenmenge reduziert werden können. Hierdurch sind kostengünstigere Recheneinheiten sowie Datenschnittstellen verwendbar. Umgekehrt können in Fahrzeug-zu-X-Kommunikationssystemen, die normalerweise aus Gründen von Datenratenbeschränkungen oder Rechenleistungsbeschränkungen gewisse Spezialnachrichten gar nicht verarbeiten könnten (z.B. Nachrüstlösungen) durch die hier beschriebene Filterung bzw. Vorverarbeitung zusätzliche Funktionen ermöglicht werden.

Weitere bevorzugte Ausführungsformen ergeben sich aus den Unteransprüchen und der nachfolgenden Beschreibung eines Ausführungsbeispiels an Hand von Figuren.

### Es zeigt

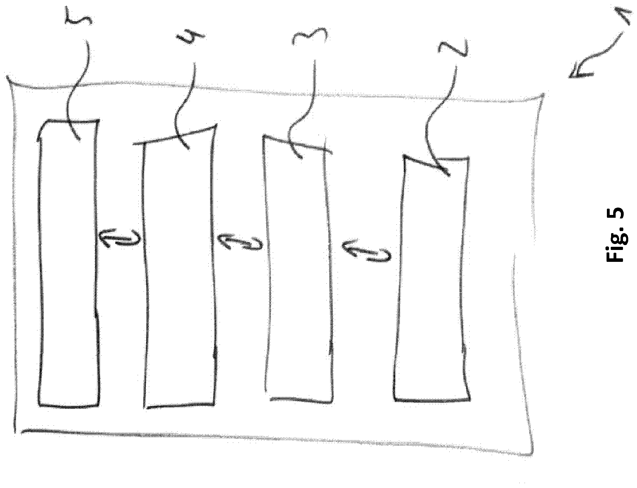

Fig. 5 beispielhaft den Aufbau eines Netzwerkstacks.

Die Bezugszeichen der Fig. 5 betreffen andere technische Elemente als die Bezugszeichen der Fig. 1 bis 4.

Fig. 5 zeigt ein Beispiel, das nicht Teil der beanspruchten Erfindung ist, für den Aufbau von Netzwerkstack 1.

Netzwerkstack 1 umfasst zunächst Dateneingangsprozess 2, mittels dessen drahtlos empfangene Fahrzeug-zu-X-Botschaften als solche erkannt und erfasst werden. Beispielsgemäß werden die Fahrzeug-zu-X-Botschaften mittel Mobilfunk und WLAN empfangen. Von Dateneingangsprozess 2 werden die erfassten Fahrzeug-zu-X-Botschaften über Netzwerk- und Transportprozess 3 an Datenverwaltungsprozess 4 weitergeführt. In Datenverwaltungsprozess 4 erfolgt üblicherweise eine erste Auswertung der Daten der empfangenen Fahrzeug-zu-X-Botschaften, wobei die Dateninhalte der erfassten Fahrzeug-zu-X-Botschaften gesammelt, sortiert und ggf. an entsprechende kommunikationsbasierte Anwendungsprozesse 5 weitergeleitet werden. Bei Anwendungsprozess 5 handelt es sich um die sogenannten Facilities bzw. Anwendungen bzw. Fahrzeugsysteme.

Gemäß einem weiteren Beispiel, das nicht Teil der beanspruchten Erfindung ist, erfolgt die Auswahl der zu verarbeitenden Fahrzeug-zu-X-Botschaften weiterhin unter Berücksichtigung einer aktuellen Rechenauslastung des Fahrzeug-zu-X-Kommunikationssystems.

In einem weiteren Beispiel,das nicht Teil der beanspruchten Erfindung ist, erfolgt die Auswahl der zu verarbeitenden Fahrzeug-zu-X-Botschaften weiterhin unter Berücksichtigung einer Verkehrssituation, in welcher sich ein Kraftfahrzeug, das mit dem Fahrzeug-zu-X-Kommunikationssystem ausgestattet ist.

Gemäß einem weiteren Beispiel, das nicht Teil der beanspruchten Erfindung ist, wird ein in der empfangenen Fahrzeug-zu-X-Botschaft unverschlüsselt enthaltenes Zielgebiet, welches einen Bereich angibt, in dem die empfangene Fahrzeug-zu-X-Botschaft relevant ist, für die Auswahl herangezogen.

In einem weiteren Beispiel, das nicht Teil der beanspruchten Erfindung ist, werden im Kraftfahrzeug aktivierte Fahrzeugsysteme und/oder Funktionen für die Auswahl herangezogen.

Gemäß einem weiteren Beispiel, das nicht Teil der beanspruchten Erfindung ist, werden mehrfach empfangene identische Fahrzeug-zu-X-Botschaft nur einmal verarbeitet.

In einem weiteren Beispiel,das nicht Teil der beanspruchten Erfindung ist, wird eine geplante Fahrtroute des Kraftfahrzeugs für die Auswahl herangezogen.

Gemäß einem weiteren Beispiel,das nicht Teil der beanspruchten Erfindung ist, werden Fahrzeug-zu-X-Botschaften, welche optionalen Diensten zugeordnet sind, in Hochlastsituationen vollständig verworfen.

In einem weiteren Beispiel,das nicht Teil der beanspruchten Erfindung ist, erfolgt die Auswahl bereits durch einen Treiber eines Empfangsmoduls des Fahrzeug-zu-X-Kommunikationssystems.

Gemäß einem weiteren Aspekt der Erfindung sind die Arten von Fahrzeug-zu-X-Botschaften sogenannte Decentralized Environmental Notification Message (DENM), Straßentopologie (MAP) und Signal Phase and Timing (SPAT)

## Patentansprüche

1. Verfahren zum Filtern von in Datenpaketen (43) verpackten Infrastrukturbeschreibungsnachrichten (17), die in einem Fahrzeug-Ad-hoc-Netzwerk (1) neben Positionsinformationsnachrichten (17) zur Lokalisierung einzelner Teilnehmerknoten (3, 5, 8) untereinander zur Zustandsbeschreibung des Fahrzeug-Ad-hoc-Netzwerkes (1) und/oder einer Straße (2), auf der sich die Teilnehmerknoten (3, 5, 8) befinden, versendet werden, umfassend:
- Empfangen einer der Infrastrukturbeschreibungsnachrichten (17) an einem Teilnehmerknoten (3, 5, 8),
- Identifizieren eines Typs (54) der empfangenen Infrastrukturbeschreibungsnachricht (17),
- Bewerten der empfangenen Infrastrukturbeschreibungsnachricht (17) hinsichtlich einer Reaktionsnotwendigkeit, und
- Filtern der bewerteten Infrastrukturbeschreibungsnachricht (17) basierend auf einem vorbestimmten Kriterium für die Reaktionsnotwendigkeit, **dadurch gekennzeichnet, dass** die Typen von Infrastrukturbeschreibungsnachrichten (17) sogenannte Decentralized Environmental Notification Message (DENM) nach dem europäischen Standard ETSI EN 302 637-3, Straßentopologie-Nachricht (MAP, TOPO) zur Beschreibung der Infrastruktur in Form der Topologie der Straße und Signal Phase and Timing Nachricht (SPAT) zur Beschreibung der Infrastruktur in Form von Zuständen von Lichtsignalanlagen und in Abhängigkeit des Typs (54) der Infrastrukturbeschreibungsnachricht (17) folgende Kriterien herangezogen werden:
- bei einer Straßentopologie-Nachricht (MAP, TOPO) und/oder einer Decentralized Environmental Notification Message (DENM) ein wiederholtes Empfangen, wobei eine wiederholt empfangene Nachricht gefiltert wird; und
- bei einer Signal Phase and Timing (SPAT) Nachricht eine konfigurierte Zeitspanne, im Rahmen derer weitere eingehende Signal Phase and Timing Nachrichten eines Verbundes an Lichtsignalanlagen gefiltert werden, wenn von diesem Verbund bereits eine Signal Phase and Timing Nachricht empfangen wurde.

2. Verfahren nach Anspruch 1, wobei die Reaktionsnotwendigkeit wenigstens ein Potential beschreibt, mit der der empfangende Teilnehmerknoten (3, 5, 8) auf die in der Infrastrukturbeschreibungsnachricht (17) enthaltene Zustandsbeschreibung reagieren kann.

3. Verfahren nach Anspruch 2, wobei das vorbestimmte Kriterium eine Grenzbedingung umfasst, mit der der empfangende Teilnehmerknoten (3, 5, 8) auf die in der Infrastrukturbeschreibungsnachricht (17) enthaltene Zustandsbeschreibung reagieren soll.

4. Verfahren nach einem der vorstehenden Ansprüche, wobei die Reaktionsnotwendigkeit wenigstens eine Aktualität für die Zustandsbeschreibung in der Infrastrukturbeschreibungsnachricht (17) beschreibt.

5. Verfahren nach Anspruch 4, wobei die Aktualität für die Zustandsbeschreibung enthält, ob die gleiche Infrastrukturbeschreibungsnachricht (17) schon einmal empfangen wurde.

6. Verfahren nach Anspruch 4 oder 5, wobei das vorbestimmte Kriterium eine Grenzbedingung für die die Zustandsbeschreibung in der Infrastrukturbeschreibungsnachricht (17) beschreibende Aktualität umfasst.

7. Verfahren nach einem der vorstehenden Ansprüche, wobei die Reaktionsnotwendigkeit wenigstens einen Abstand des empfangenden Teilnehmerknotens (3, 5, 8) zu einer in der Zustandsbeschreibung der Infrastrukturbeschreibungsnachricht (17) enthaltenen Position (12) enthält.

8. Verfahren nach Anspruch 7, wobei das vorbestimmte Kriterium eine Grenzbedingung für den Abstand des empfangenden Teilnehmerknotens (3, 5, 8) zu der in der Zustandsbeschreibung der Infrastrukturbeschreibungsnachricht (12) enthaltenen Position (12) enthält.

9. Filtervorrichtung (48) zur Durchführung eines Verfahrens nach einem der vorstehenden Ansprüche, wobei die Filtervorrichtung einen Speicher und einen Prozessor aufweist, wobei das Verfahren in Form eines Computerprogramms in dem Speicher hinterlegt ist und der Prozessor zur Ausführung des Verfahrens vorgesehen ist, wenn das Computerprogramm aus dem Speicher in den Prozessor geladen ist.

10. Empfänger (16) für ein Fahrzeug (3) zum Empfangen von in Datenpaketen (43) verpackten Nachrichten (17) mit einem Übertragungssignal (18) in einem Fahrzeug-Ad-Hoc-Netzwerkes (1), umfassend:
- eine Antenne (19) zum Empfangen des Übertragungssignals (18),
- eine Filtervorrichtung (45, 48) nach Anspruch 9 zum Filtern wenigstens eines Teils der Datenpakete (43) aus dem Übertragungssignals (18), und
- eine Darstellungsvorrichtung (46) zum Extrahieren der Nachrichten (17) aus den gefilterten Datenpaketen (50).

## Claims

1. Method for filtering infrastructure description messages (17), packaged in data packets (43), that are sent in a vehicle ad hoc network (1) besides position information messages (17) for locating individual subscriber nodes (3, 5, 8) among one another in order to describe the state of the vehicle ad hoc network (1) and/or of a road (2) on which the subscriber nodes (3, 5, 8) are situated, comprising:
- receiving one of the infrastructure description messages (17) at a subscriber node (3, 5, 8),
- identifying a type (54) of the received infrastructure description message (17),
- rating the received infrastructure description message (17) in respect of a need for reaction, and
- filtering the rated infrastructure description message (17) on the basis of a predetermined criterion for the need for reaction, **characterized in that** the types of infrastructure description messages (17) are the so-called decentralized environmental notification message (DENM) according to the European standard ETSI EN 302 637-3, road topology message (MAP, TOPO) for describing the infrastructure in the form of the topology of the road and signal phase and timing (SPAT) message for describing the infrastructure in the form of states of traffic lights and the following criteria are used depending on the type (54) of the infrastructure description message (17):
- repeated reception in the case of a road topology message (MAP, TOPO) and/or a decentralized environmental notification message (DENM), a repeatedly received message being filtered; and
- a configured period of time, during which further arriving signal phase and timing messages from a combination of traffic lights are filtered if a signal phase and timing message has already been received from this combination, in the case of a signal phase and timing (SPAT) message.

2. Method according to Claim 1, wherein the need for reaction describes at least one potential with which the receiving subscriber node (3, 5, 8) can react to the state description included in the infrastructure description message (17).

3. Method according to Claim 2, wherein the predetermined criterion comprises a boundary condition with which the receiving subscriber node (3, 5, 8) is supposed to react to the state description included in the infrastructure description message (17).

4. Method according to one of the preceding claims, wherein the need for reaction describes at least one currentness for the state description in the infrastructure description message (17).

5. Method according to Claim 4, wherein the currentness for the state description includes whether the same infrastructure description message (17) has already been received.

6. Method according to Claim 4 or 5, wherein the predetermined criterion comprises a boundary condition for the currentness describing the state description in the infrastructure description message (17).

7. Method according to one of the preceding claims, wherein the need for reaction includes at least one distance of the receiving subscriber node (3, 5, 8) from a position (12) included in the state description of the infrastructure description message (17).

8. Method according to Claim 7, wherein the predetermined criterion includes a boundary condition for the distance of the receiving subscriber node (3, 5, 8) from the position (12) included in the state description of the infrastructure description message (12).

9. Filter device (48) for performing a method according to one of the preceding claims, wherein the filter device comprises a memory and a processor, wherein the method is stored in the memory in the form of a computer program and the processor is intended to carry out the method when the computer program is loaded into the processor from the memory.

10. Receiver (16) for a vehicle (3) for receiving messages (17), packaged in data packets (43), with a transmission signal (18) in a vehicle ad hoc network (1), comprising:
- an antenna (19) for receiving the transmission signal (18),
- a filter device (45, 48) according to Claim 9 for filtering at least some of the data packets (43) from the transmission signal (18), and
- a preparation device (46) for extracting the messages (17) from the filtered data packets (50).

## Revendications

1. Procédé de filtrage de messages de description d'infrastructure (17) conditionnés en paquets de données (43), lesquels sont envoyés dans un réseau ad hoc de véhicule (1) à côté de messages d'information de position (17) en vue de la localisation de noeuds d'abonné (3, 5, 8) individuels entre eux en vue de la description de l'état du réseau ad hoc de véhicule (1) et/ou d'une route (2) sur laquelle se trouvent les noeuds d'abonné (3, 5, 8), comprenant :
- réception de l'un des messages de description d'infrastructure (17) au niveau d'un noeud d'abonné (3, 5, 8),
- identification d'un type (54) du message de description d'infrastructure (17) reçu,
- évaluation du message de description d'infrastructure (17) reçu du point de vue d'une nécessité de réaction, et
- filtrage du message de description d'infrastructure (17) évalué en se basant sur un critère prédéterminé pour la nécessité de réaction, **caractérisé en ce que** les types de messages de description d'infrastructure (17) utilisés sont ce que l'on appelle un message décentralisé de notification environnementale (DENM) selon la norme européenne ETSI EN 302 637-3, un message de topologie routière (MAP, TOPO) destiné à décrire l'infrastructure sous la forme de la topologie de la route et un message de phase et de rythme de signal (SPAT) destiné à décrire l'infrastructure sous la forme d'états d'installations de signalisation lumineuse et les critères suivants sont utilisés en fonction du type (54) du message de description d'infrastructure (17) :
- dans le cas d'un message de topologie routière (MAP, TOPO) et/ou d'un message décentralisé de notification environnementale (DENM), une réception répétée, un message reçu de manière répétée étant filtré ; et
- dans le cas d'un message de phase et de rythme de signal (SPAT), un intervalle de temps configuré, dans le cadre duquel les messages de phase et de rythme de signal supplémentaires entrants d'un groupement d'installations de signalisation lumineuse sont filtrés si un message de phase et de rythme de signal a déjà été reçu en provenance de ce groupement.

2. Procédé selon la revendication 1, la nécessité de réaction décrivant au moins un potentiel avec lequel le noeud d'abonné (3, 5, 8) récepteur peut réagir à la description d'état contenue dans le message de description d'infrastructure (17).

3. Procédé selon la revendication 2, le critère prédéterminé comprenant une condition limite avec laquelle le noeud d'abonné (3, 5, 8) récepteur doit réagir à la description d'état contenue dans le message de description d'infrastructure (17).

4. Procédé selon l'une des revendications précédentes, la nécessité de réaction décrivant au moins une actualité pour la description d'état dans le message de description d'infrastructure (17).

5. Procédé selon la revendication 4, l'actualité pour la description d'état contenant l'indication si le même message de description d'infrastructure (17) a déjà été reçu une fois.

6. Procédé selon la revendication 4 ou 5, le critère prédéterminé comprenant une condition limite pour l'actualité qui décrit la description d'état dans le message de description d'infrastructure (17).

7. Procédé selon l'une des revendications précédentes, la nécessité de réaction contenant au moins un écart entre le noeud d'abonné (3, 5, 8) récepteur et une position (12) incluse dans la description d'état du message de description d'infrastructure (17).

8. Procédé selon la revendication 7, le critère prédéterminé contenant une condition limite pour l'écart entre le noeud d'abonné (3, 5, 8) récepteur et la position (12) incluse dans la description d'état du message de description d'infrastructure (12).

9. Dispositif de filtrage (48) destiné à mettre en oeuvre un procédé selon l'une des revendications précédentes, le dispositif de filtrage possédant une mémoire et un processeur, le procédé étant stocké dans la mémoire sous la forme d'un programme informatique et le processeur étant prévu pour mettre en oeuvre le procédé lorsque le programme informatique est chargé de la mémoire dans le processeur.

10. Récepteur (16) pour un véhicule (3) destiné à recevoir des messages (17) conditionnés en paquets de données (43) avec un signal de transmission (18) dans un réseau ad hoc de véhicule (1), comprenant :
- une antenne (19) destinée à recevoir le signal de transmission (18),
- un dispositif de filtrage (45, 48) selon la revendication 9, destiné à filtrer au moins une partie des paquets de données (43) hors du signal de transmission (18), et
- un dispositif de représentation (46) destiné à extraire les messages (17) des paquets de données (50) filtrés.
